# EUROPEAN PATENT SPECIFICATION

(11) **EP 0 284 260 B1**
(45) Date of publication and mention of the grant of the patent: **03.02.1993**
(21) Application number: 88302170.1
(22) Date of filing: 11.03.1988
(51) Int. Cl.: G06F 3/12, G06K 15/10

(54) **Raster scan type printer**
Drucker vom Rasterabtasttyp
Imprimante de type balayage de trame

(30) Priority: 14.03.1987 JP 59871/87
(43) Date of publication of application: 28.09.1988
(73) Proprietor: BROTHER KOGYO KABUSHIKI KAISHA, Nagoya-shi, Aichi 467 (JP)
(72) Inventor: Hattori, Tomoaki Brother Kogyo Kabushiki Kaisha, Nagoya-shi Aichi-ken (JP); Sasaki, Ichiro Brother Kogyo Kabushiki Kaisha, Nagoya-shi Aichi-ken (JP)
(74) Representative: Senior, Alan Murray

(56) References cited:
- US-A- 3 651 258
- PATENT ABSTRACTS OF JAPAN, vol. 9, no. 40 (P-336)[1763], 20th February 1985; & JP-A-59 180 787
- WESCON TECHNICAL PAPERS, 30th October - 2nd November 1984, pages 1-6, Anaheim, California, Los Angeles, US; K.M. GUTTAG et al.: "System design alternatives using Texas Instruments video system controller and special video RAMS"
- IEEE TRANSACTIONS ON MAGNETICS, vol. SC-19, no. 6, December 1984, pages 999-1007, IEEE, New York, US; R. PINKHAM et al.: "A high speed dual port memory with simultaneous serial and random mode access for video applications"
- IBM TECHNICAL DISCLOSURE BULLETIN, vol. 26, no. 4, September 1983, pages 1889-1892, New York, US; L.G. LANKFORD et al.: "Laser printer scan length servo"

## Description

This invention relates to a printing device and more particularly to a dot data output device for a raster scan type printer.

In conventional raster scan type printers such as laser printers, multiple dot data representing character print informations are stored in a bit image transfer bank, and then sequentially read out to be converted to a raster data by means of a shift register. In accordance with this raster data, a printing device such as scanner is driven to print the characters on a sheet-like recording medium.

However, such a bit image transfer bank for storing multiple dot data can not be quickly operated to read out and write the dot data because it uses dynamic random access memory (DRAM) or static random access memory (SRAM), resulting in a problem when applied to a printing system requiring a high-speed operation of dot data reading and writing.

For speeding up the operation for reading and writing dot data in such a system with DRAM or SRAM, one solution has been proposed in which two or more of bit image transfer banks are used. While the dot data is being transferred to a bit image transfer bank, the dot data written in advance in another bit image transfer bank is read out therefrom and converted to a raster data in a shift register. Thus, reading and writing of dot data can be alternately operated without interruption. This system including two or more of bit image transfer banks will, however, inevitably increase the cost for memory devices. Moreover, with this system, the central processing unit (CPU) for controlling dot data transfer receives an interrupt signal from a selector arranged to switch between the two bit image transfer banks upon every such switching operation, so that repeated operation with such interrupt signals would result in a degraded efficiency in the CPU operation. Further, since the CPU is unable to access the bit image transfer bank from which the bit data is being transferred to the shift register, it could not deal with any update or delete of dot data even though such change be required while transferring dot data to the shift register.

It is therefore an object of this invention to provide a raster scan printer capable of reducing the cost in memory devices, while allowing update, deletion and/or addition of data to be done at any time before starting data transfer to the shift register.

According to the present invention, there is provided a raster scan type printer comprising
storage means for storing a plurality of scan data including dot data representing characters to be printed on a printing medium,
control means for sequentially reading out a set of data for one scanning operation from said storage means in the order of scanning,
and printing means, including a scanner for performing a scanning operation, for performing a printing operation in response to said set of data, characterised in that:
said storage means comprises a dual port memory means including a first storage section for storing said plurality of scan data, and a second storage section for storing a specific set of scan data to be transferred to said printing means for a specific scanning operation, synchronisation generating means for detecting a predetermined position of the scanner of the printing means and for generating a synchronisation signal
transfer means for reading out said specific set of scan data from said first storage section to said second storage section in response to said synchronisation signal.

The invention will be further described by way of non-limitative example with reference to the accompanying drawings in which:
Fig. 1 is a block diagram illustrating the electrical arrangement of the dot data output section of the printer embodying the present invention; and
Fig. 2 is an explanatory view illustrating details of the dual port memory of the printer.

A preferred embodiment of this invention will now be described with reference to the accompanying drawings.

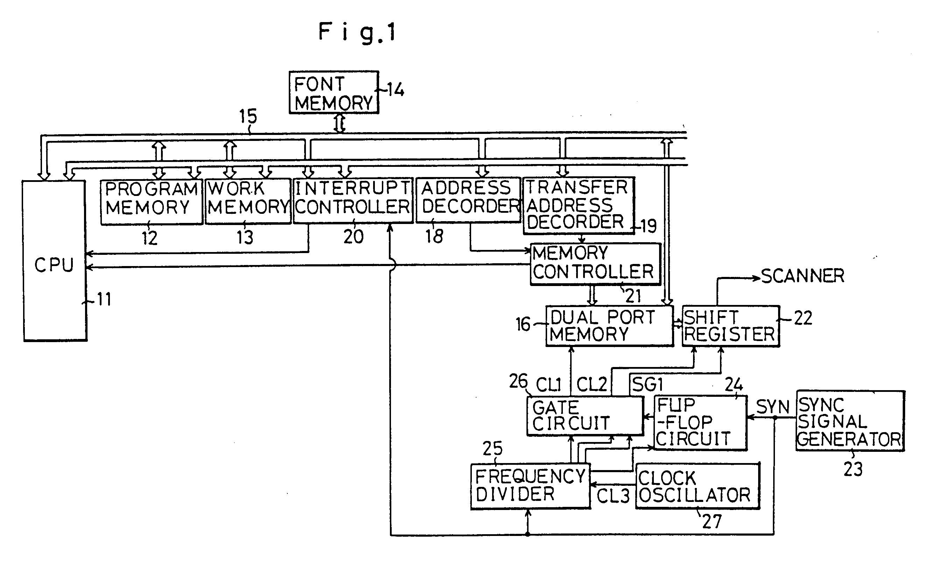

Referring to Fig. 1, a central processing unit (CPU) 11 comprises a program memory 12 sorting a control program and a work memory 13 which temporarily stores the operation results from CPU to perform operation processes in accordance with te control program. A font memory 14 stores dot data as aggregates of multiple dots which represents print information of characters and symbols. CPU 11 reads out any desired dot data from the font memory 14 to generate a 1-scan data, which is sent to a dual port memory 16 via a data address bus 15.

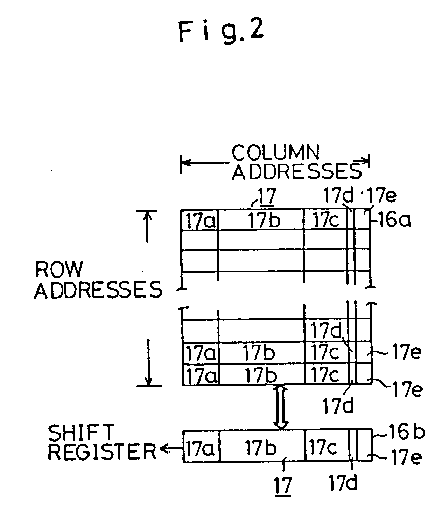

As shown in Fig. 2, the dual port memory 16 comprises a random access memory (RAM) 16a storing a print data and a serial access memory (SAM) 16b storing a 1-scan data.

RAM 16a (NEC UPD41264, TI TMS4461NL), constituted by a memory cell array of 256 x 4096 bits, is divided into row addresses from 0 to 255 and column addresses from 0 to 511. The 1-scan data 17, which is required for one scanning operation of the scanner, is stored in every row address combined with all the column addresses. Accordingly, a specific 1-scan data can be determined simply by designating a corresponding row address.

The 1-scan data 17 is devided into a fisrt non-image section 17a, an image section 17b, a continuous lighting section 17c, a transfer address section 17d and a second non-image section 17e. The image section 17b stores dot data to be printed on a certain dot area of a printing sheet or paper. The continuous lighting section 17c stores a data for instructing continued lighting of a luminous source to optically detect the operating position of the printing section in its scanning operation.

The first and second non-image sections 17a and 17e and the transfer address section 17d store data which is not involved in dot printing. These sections are provided to set a timing for printing the dot data stored in the image section 17b on a certain dot area of the printing paper, as the 1-scan data is sequentially read out with sync signals.

Thus, CPU 11 reads out a font data from the font memory 14 to generate a 1-scan data 17 which is to be stored in a certain row address of RAM 16a.

SAM 16b consisting of 1 x 512 x 4 bits receives the respective 1-scan data from RAM 16a to be stored therein.

CPU 11 outputs a row address data for specifying a specific row address stored in the dual port memory 16 to an address decoder 18. The address decoder 18 then transfers an address specified based on the row address data from CPU 11 to a memory controller 21. CPU 11 also delivers a starting address data for the data transfer to a transfer address decoder 19, which in turn generates a signal to the effect when receiving and detecting the starting address data.

The memory controller 21 operates to set a timing for reading and writing of the 1-scan data 17 from RAM 16a and to SAM 16b as well as for transferring the 1-scan data 17 to the shift register 22, in accordance with these address data. This transfer operation takes place responsive to an output clock signal CL₁.

The shift register 22 receives the 1-scan data from SAM 16b of the dual port memory 16 through its serial port. The 1-scan data is output bit by bit to the scanner as a raster data, each time an image clock signal CL₂ comes out while a load signal SG₁ is being output.

A sync signal generator 23 detects a predetermined position (home position) which the scanner passes by every time it performs one scanning operation, whereupon it sends a sync signal SYN to the interrupt controller 20, a flip-flop circuit 24 and a frequency divider 25. The flip-flop circuit 24 outputs a signal which closes a gate circuit 26 in response to the sync signal 24 and opens the circuit 26 in response to an inverse signal from the frequency divider 25.

The frequency divider 25 is preset according to the sync signal SYN and counts the clock signals CL₃ from a clock oscillator 27 to send an inverse signal to the flip-flop circuite 24 when a predetermined count is reached, that is a given period of time has passed. The frequency divider 25 demultiplies the clock signal CL₃ from the clock oscillator 27 at a predetermined dividing ratio to generate the output clock signal CL₁, the image clock signal CL₂ and the load signal SG₁, the former being transferred to the dual port memory 16 and the latter two to the shift register 22 via the gate circuit 26.

The operation of the printer designed as above will now be described below.

First, CPU 11 reads out a dot data from the font memory 14 to generate a 1-scan data 17 required for one scanning operation of the scanner. The 1-scan data 17 is thus stored in RAM 16a of the dual port memory 16 such that the dot data corresponding to one scanning operation falls upon the image section 17b. CPU 11 sequentially generates 1-scan data 17 and transfers each of them to a specified row address in RAM 16a. Specifying the row address for a 1-scan data is achieved by sending an address data from CPU 11 to the address decoder 18.

Now supposed that the row addresses of RAM 16a are all occupied with 1-scan data 17 written into them. When the scanner returns to the home position to stand by for re-starting the next scanning operation, i.e., when a sync signal SYN is output from the generator 23, the flip-flop circuit 24 closes the gate circuit 26, while at the same time, the frequency divider 25 resets the count of clock signal CL₃ to start a renewed count operation.

In response to the sync signal SYN the interrupt controller 20 sends an interrupt signal to the CPU 11. When CPU 11 delivers a starting transfer address to the bus 15 in response to the interrupt signal, the transfer address decoder 19 and the address decoder 18 detects the starting transfer address to produce a signal for starting the transfer to the memory controller 21. The memory controller 21 then sends a transfer signal to the dual port memory 16 to transfer a 1-scan data 17 at the address of RAM 16a specified by the transfer address decoder 19 to SAM 16b.

When transfer of the 1-scan data to SAM 16b has been completed, CPU reads out another dot data from the font memory 14 to generate another 1-scan data required for the next one scanning operation of the scanner. Thus, the operation described above is reiterated in the same manner.

The flip-flop circuit 24 opens the gate circuit 26 in response to the inverse signal from the frequency divider 25 so that the output clock signal CL₁ is delivered to the dual port memory 16 whereas the image clock signal CL₂ and the load signal SG₁ are transferred to the shift register 22 through the opened gate circuit 26. The 1-scan data in SAM 16b is sent to the shift register 22 in response to the output clock signal CL₁. Then, the 1-scan data 17 is serially output to the scanner from the shift register 22 in accordance with the image clock signal CL₂.

The data within the non-image section 17a of the 1-scan data 17 is first output sequentially in response to the image clock signal CL₂. After the last bit of the data in the non-image section 17a has been output, the scanner reaches the print position of the printing paper, and thereafter the dot data within the image section 17b is output sequentially. As a result, the scanner prints dots on the printing paper in dependence on the dot data stored in the image section 17b being serially output.

As the output of the dot data in the image section 17b is followed by the data in the next continuous lighting section 17c, the luminuous source is turned on to optically detect the operating position of the scanner in scanning operation for synchronism with the succeeding scanning operation.

Thus, in response to a sync signal SYN which is generated every time the scanner performs one scanning operation, a 1-scan data is sent from a specified row address in RAM 16a to SAM 16b and from SAM 16b to the shift register 22. The 1-scan data is then serially output from the shift register 22 to the scanner as a raster data.

According to this embodiment of the invention, therefore, the dot data can be sequentially output to the scanner as a raster data, while at the same time a new 1-scan data is transferred to a given storage area. Thus, CPU 11 is allowed to access the dual port memory 16 during transfeering data to the shift register 22. With this arrangement, fast printing is made possible without necessity of using more than one momery devices for a bit image transfer bank. Also, an appropriate software enables CPU 11 to specify the row address in which the 1-scan data to be changed or deleted is stored. This embodiment is therefore able to cope with a requirement for data change or deletion, if it should happen during transferring dot data.

Moreover, in this embodiment, the 1-scan data 17 corresponding to a dot data for one scanning operation is stored in each row address of RAM 16a. Accordingly, a dot data for one scanning operation can be read merely by specifying a corresponding row address, resulting in a simpler software for CPU 11 for transferring the 1-scan data 17. Since the 1-scan data 17 are divided into the non-image sections 17a and 17e, the image section 17b and the continuous lighting section 17c, location of the image section 17b accomodating the dot data for one scanning operation can be appropriately altered within the same 1-scan data 17, so that the timing at which the dot data is first output from the shift register to the scanner can be changed as desired.

A modification of the invention can consist in that the 1-scan data 17 may comprise the dot data as print information only, while column addresses per row address in RAM 16a may store multiple 1-scan data 17 thus contracted.

## Claims

1. A raster scan type printer comprising
storage means (16) for storing a plurality of scan data including dot data representing characters to be printed on a printing medium,
control means (11, 21) for sequentially reading out a set of data for one scanning operation from said storage means in the order of scanning,
and printing means, including a scanner for performing a scanning operation, for performing a printing operation in response to said set of data, characterised in that:
said storage means comprises a dual port memory means including a first storage section (16a) for storing said plurality of scan data, and a second storage section (16b) for storing a specific set of scan data to be transferred to said printing means for a specific scanning operation, synchronisation generating means for detecting a predetermined position of the scanner of the printing means and for generating a synchronisation signal
transfer means for reading out said specific set of scan data from said first storage section to said second storage section in response to said synchronisation signal.

2. A printer according to claim 1 wherein each set of data comprises print data (17b) representing dots to be printed on said printing medium and non-print data (17a, 17c-e) located before and after said print data.

3. A printer according to claim 1 or 2 wherein said first storage section is divided into plural row addresses and a set of scan data is stored in said first storage section at a respective one of said row addresses.

## Patentansprüche

1. Drucker vom Rasterabtasttyp mit
Speichermittel (16) zum Speichern einer Mehrzahl von Abtastdaten einschließlich Punktdaten, die auf ein Druckmedium zu druckende Zeichen darstellen,
Steuermittel (11, 21) zum sequentiellen Auslesen eines Datensatzes für eine Abtasttätigkeit aus dem Speichermittel in der Reihenfolge des Abtastens,
und Druckmittel mit einem Abtaster zum Durchführen einer Abtasttätigkeit zum Ausführen einer Drucktätigkeit als Reaktion auf den Satz von Daten,
dadurch gkennzeichnet, daß das Speichermittel ein Dualportspeichermittel mit einem ersten Speicherabschnitt (16a) zum Speichern der Mehrzahl von Abtastdaten und einen zweiten Speicherabschnitt (16b) zum Speichern eines spezifischen Satzes von Daten, zu dem Druckmittel für eine spezifische Abtasttätigkeit zu übertragen ist, Synchronisationserzeugungsmittel zum Erfassen einer vorbestimmten Position des Abtasters des Druckmittels und zum Erzeugen eines Synchronisationssignales,
ein Übertragungsmittel zum Auslesen des spezifischen Satzes von Abtastdaten aus dem ersten Speicherabschnitt zu dem zweiten Speicherabschnitt als Reaktion auf das Synchronisationssignal aufweist.

2. Drucker nach Anspruch 1, bei dem jeder Satz von Daten Druckdaten (17b), die auf das Druckmedium zu druckende Punkte darstellen, und Nicht-Druckdaten (17a, 17c bis 17e) die vor und nach den Druckdaten angeordnet sind, aufweist.

3. Drucker nach Anspruch 1 oder 2, bei dem der erste Speicherabschnitt in eine Mehrzahl von Zeilenadressen unterteilt ist und ein Satz von Abtastdaten in dem ein erster Speicherabschnitte an einer entsprechenden der Zeilenadressen gespeichert ist.

## Revendications

1. Imprimante du type à balayage de trame comprenant
un moyen de mémorisation (16) pour mémoriser une pluralité de données de balayage comprenant des données matricielles représentant des caractères à imprimer sur un support d'impression,
un moyen de commande (11, 21) pour lire de manière séquentielle un ensemble de données pour une opération de balayage à partir dudit moyen de mémorisation dans l'ordre de balayage,
et un moyen d'impression, comprenant un dispositif de balayage pour effectuer une opération de balayage, pour exécuter une opération d'impression en réponse audit ensemble de données ;
caractérisé en ce que ledit moyen de mémorisation comprend :
un moyen de mémoire à double entrée comprenant une première partie de mémorisation (16a) pour mémoriser ladite pluralité de données de balayage, et une seconde partie de mémorisation (16b) pour mémoriser un ensemble spécifique de données de balayage destiné à être transféré dans ledit moyen d'impression pour une opération de balayage spécifique, un moyen de production de synchronisation pour détecter une position prédéterminée du dispositif de balayage du moyen d'impression et pour produire un signal de synchronisation
un moyen de transfert pour lire ledit ensemble spécifique de données de balayage issu de ladite première partie de mémorisation vers ladite seconde partie de mémorisation en réponse audit signal de synchronisation.

2. Imprimante selon la revendication 1, dans laquelle chaque ensemble de données comprend une donnée d'impression (17b) représentant des points à imprimer sur ledit support d'impression et des données non imprimées (17a, 17c à 17e) situées avant et après ladite donnée d'impression.

3. Imprimante selon la revendication 1 ou la revendication 2, dans laquelle ladite première section de mémorisation est divisée en plusieurs adresses de rangée et dans laquelle un ensemble de données de balayage est mémorisé dans ladite première section de mémorisation au droit de l'une respective desdites adresses de rangée.
